(19) **Europäisches Patentamt**

**European Patent Office**

**Office européen des brevets**

(11) Veröffentlichungsnummer : **0 414 254 B1**

## (12) EUROPÄISCHE PATENTSCHRIFT

(45) Veröffentlichungstag der Patentschrift :
**18.11.93 Patentblatt 93/46**

(21) Anmeldenummer : **90116242.0**

(22) Anmeldetag : **24.08.90**

(51) Int. Cl.⁵ : **B60P 1/64**

(54) Sattelauflieger für Container.

(30) Priorität : **24.08.89 DE 8910136 U**

(43) Veröffentlichungstag der Anmeldung :
**27.02.91 Patentblatt 91/09**

(45) Bekanntmachung des Hinweises auf die
Patenterteilung :
**18.11.93 Patentblatt 93/46**

(84) Benannte Vertragsstaaten :
**AT BE DE DK FR NL**

(56) Entgegenhaltungen :
**EP-A- 0 094 701**

(56) Entgegenhaltungen :
**DE-A- 3 037 081**
**DE-B- 1 630 599**
**NL-A- 8 600 328**
**US-A- 4 580 805**

(73) Patentinhaber : **Blunck, Christian**
**Am Wiesengrund 35**
**D-21255 Kakenstorf (DE)**

(72) Erfinder : **Die Erfinder haben auf ihre Nennung**
**verzichtet**

(74) Vertreter : **Eisenführ, Speiser & Partner**
**Martinistrasse 24**
**D-28195 Bremen (DE)**

## Beschreibung

Die Erfindung betrifft einen Sattelauflieger für Container mit einem von einem ersten auf ein zweites Längenmaß verlängerbaren Längsrahmen zur Auflage von Containern unterschiedlicher Länge und Anzahl, mit einem an einen Sattelschlepper kuppelbaren vorderen Längsrahmenteil, einem in Fahrtrichtung dahinter angeordneten mittleren Längsrahmenteil, an dem das vordere Längsrahmenteil verschiebbar geführt und arretierbar ist sowie die Laufräder angeordnet sind, und einem in Fahrtrichtung hinter dem mittleren Längsrahmenteil angeordneten hinteren Längsrahmenteil, das ebenfalls am mittleren Längsrahmenteil in Fahrtrichtung verschiebbar geführt und arretierbar ist, wobei die Längsrahmenteile Halte- elemente zur verriegelbaren endseitigen Abstützung der Container aufweisen.

Ein derartiger Sattelauflieger ist aus der EP-A-0 094 701 bekannt, der aus drei Längsrahmenteilen aufgebaut ist, wobei die vorderen und hinteren Längsrahmenteile am mittleren Längsrahmenteil in Fahrtrichtung verschiebbar geführt und arretierbar sind. Die Verstellung der vorderen und hinteren Längsrahmenteile zur Anpassung der Gesamtlänge des Sattelaufliegers an den oder die aufzunehmenden Container soll zweckmäßigerweise bei blockierten Bremsen durchgeführt werden. Die Verschiebung der vorderen und hinteren Längsrahmenteile kann dann mit Hilfe einer Zugmaschine durchgeführt werden, die zu dem zu verschiebenden Längsrahmenteil ausgerichtet, an diesen angekoppelt, zur Verschiebung des Längsrahmenteils um einen bestimmten Weg vor- oder zurückgefahren und anschließend von diesem Längsrahmenteil wieder abgekoppelt werden muß. Da zur Aufrechterhaltung der Anhängelast innerhalb der zulässigen Grenzen sowohl das vordere als auch das hintere Längsrahmenteil verstellt werden muß, ist die zuvor beschriebene Prozedur zweimal auszuführen. Die Verstellung des bekannten Sattelaufliegers ist demnach unverhältnismäßig zeitaufwendig und außerdem sehr umständlich, da die Zugmaschine zweimal an- und abgekoppelt und vom vorderen und hinteren Längsrahmenteil und umgekehrt manövriert werden muß. Dieser Nachteil besteht auch dann, wenn als Zugmaschine der für den Sattelauflieger vorgesehene Sattelschlepper verwendet wird, da auch dieser zur Verstellung des hinteren Längsrahmenteils vom vorderen Längsrahmenteil abgekoppelt und entsprechend verfahren werden muß.

Aufgabe der Erfindung ist es daher, die bekannten Sattelauflieger derart weiterzubilden, daß eine schnellere und einfachere Verstellung der vorderen und hinteren Längsrahmenteile möglich ist.

Diese Aufgabe wird dadurch gelöst, daß bei einem Sattelauflieger der eingangs genannten Art das vordere und hintere Längsrahmenteil mechanisch derart miteinander gekoppelt sind, daß sie nur in entgegengesetzter Richtung zueinander gegenüber dem mittleren Längsrahmenteil verschiebbar sind und das hintere Längsrahmenteil vom vorderen Längsrahmenteil antreibbar ist.

Der erfindungsgemäße Sattelauflieger erlaubt eine erheblich schnellere und einfachere Verstellung der vorderen und hinteren Längsrahmenteile, da der ohnehin am Sattelauflieger angekuppelte Sattelschlepper zur Hilfe genommen werden kann, ohne daß dieser vom vorderen Längsrahmenteil abgekuppelt zu werden braucht. Wenn nämlich die Laufräder am mittleren Längsrahmenteil gebremst und somit blockiert sind, wird durch langsames Vor- oder Zurückfahren des Sattelschleppers das daran angekuppelte vordere Längsrahmenteil gegenüber dem mittleren Längsrahmenteil bewegt, wodurch das hintere Längsrahmenteil angetrieben und automatisch in gegenläufiger Richtung verschoben wird. Eine separate Verschiebung des vorderen und des hinteren Längsrahmenteils durch Manövrieren, Ankoppeln, Verfahren und anschließendes Abkuppeln des Sattelschleppers - wie beim Stand der Technik erforderlich - entfällt. Dadurch ergibt sich ein beträchtlicher Zeitgewinn. Die für den erfindungsgemäßen Sattelauflieger benötigte Verstellzeit beträgt nur einen Bruchteil der beim Stand der Technik erforderlichen Verstellzeit. Das Aufladen des oder der Container auf den in seiner Lange entsprechend einzustellenden Sattelauflieger kann somit in erheblich kürzerer Zeit durchgeführt werden. Die Stillstandszeit des Sattelaufliegers kann dadurch erheblich gesenkt werden, was zu einer Senkung der Betriebskosten führt, da bekanntlich im Speditionsgeschäft Verzögerungen durch längere Stillstandszeiten hohe Kosten verursachen.

Ein weiterer Vorteil der Erfindung besteht darin, daß aufgrund der erfindungsgemäßen gegenläufigen Verschiebbarkeit der vorderen und hinteren Längsrahmenteile die Aufrechterhaltung von im wesentlichen konstanten Anhänge- und Achslasten bei verschiedenen ausgezogenen Stellungen gewährleistet wird.

Ferner sei noch angemerkt, daß an Stelle von zwei oder mehreren kürzeren Containern, z.B. zwei 20-Fuß-Containern, auch ein einzelner langer Container - z.B. mit einer Länge von 40 oder 45 Fuß oder darüber - auf dem erfindungsgemäßen Sattelauflieger in vollständig auseinandergezogem Zustand angeordnet werden kann.

Zweckmäßigerweise sind das erste und das dritte Längsrahmenteil jeweils um den gleichen Längenabstand gegenüber dem zweiten Längsrahmenteil verschiebbar.

Bei einer Weiterbildung können sich am zweiten Längsrahmenteil das erste und das dritte Längsrahmenteil gegenseitig überlappen und auf ihren einander zugewandten Seiten Zahnreihen aufweisen, die gemeinsam mit einem zwischen ihnen liegenden und am zweiten Längsrahmenteil gelagerten Zahnrad in Eingriff stehen. Dies ergibt eine besonders einfache mechanische Kopplung zwischen dem ersten und dem dritten Längsrahmenteil.

Eine weitere Ausführung der Erfindung zeichnet sich dadurch aus, daß das zweite Längsrahmenteil mindestens einen hohlen Längsholm und das erste und das dritte Längsrahmenteil einen stabförmigen Abschnitt aufweisen, mit dem sie in das vordere bzw. das hintere offene Ende des Längsholmes des zweiten Längsrahmenteils gesteckt und aus diesem teleskopartig herausziehbar sind. Diese Ausführung ergibt eine besonders einfache und zugleich platzsparende Lagerung des ersten und des dritten Längsrahmenteils am zweiten Längsrahmenteil. Zur Erzielung einer drehfesten Lagerung der drei Längsrahmenteile zueinander sind vorzugsweise der Hohlraum des zweiten Längsrahmenteils und der stabförmige Abschnitt des ersten und des dritten Längsrahmenteils im Querschnitt rechteckig.

Eine weitere Ausführung der Erfindung, bei welcher wahlweise die Auflage von einem einzelnen Container, wenn der Längsrahmen auf das erste Längenmaß eingestellt ist, oder von zwei hintereinanderliegenden Containern, wenn der Längsrahmen auf das zweite Längenmaß verlängert ist möglich ist, zeichnet sich dadurch aus, daß am vorderen Ende des ersten Längsrahmenteils ein erstes Halteelement, am zweiten Längsrahmenteil ein zweites Halteelement im vorderen Bereich und in Fahrtrichtung hinter diesem ein drittes und ein viertes Halteelement sowie am hinteren Ende des dritten Längsrahmenteils ein fünftes Halteelement vorgesehen ist, wobei bei Anordnung eines einzelnen Containers das zweite Halteelement das vordere Ende und das fünfte Halteelement das rückwärtige Ende des Containers hält und bei Hintereinanderanordnung von zwei Containern das erste Halteelement das vordere Ende und das dritte Halteelement das rückwärtige Ende des vorderen Containers und das vierte Halteelement das vordere Ende und das fünfte Halteelement das hintere Ende des hinteren Containers fixiert. Eine derartige Anordnung der Halteelement erlaubt die Fixierung von Containern unterschiedlicher Länge. Außerdem braucht bei dieser Ausführung der Längsrahmen nicht unbedingt auf die Länge eines einzelnen Containers verkürzt zu werden, d. h. das erste Längenmaß des Längsrahmens in zusammengeschobenen Zustand kann größer als das Längenmaß eines einzelnen Containers sein. Zwar wird dadurch der Verschiebeweg kleiner, jedoch reduziert sich dadurch in aller Regel auch der Aufwand für den Verschiebemechanismus.

Eine Weiterbildung dieser Ausführung zeichnet sich dadurch aus, daß der Abstand zwischen dem zweiten und dem vierten Halteelement halb so groß ist wie die halbe Differenz zwischen beiden Längenmaßen des Längsrahmens und daß der Abstand zwischen dem ersten und dem dritten Halteelement gleich groß ist wie der Abstand zwischen dem vierten und dem fünften Halteelement, wenn der Längsrahmen auf das zweite Längenmaß verlängert ist. Diese Weiterbildung ist dann vorteilhaft, wenn das erste und das dritte Längsrahmenteil jeweils um den gleichen Längenabstand gegenüber dem zweiten Längsrahmenteil verschiebbar sind und Container gleicher Länge verwendet werden.

Bei einer weiteren Ausbildung der Erfindung bestehen die Halteelemente aus auf dem Längsrahmen angeordneten Querträgern mit an ihren beiden Enden vorgesehenen Fixierelementen. Dies ergibt eine besonders sichere Abstützung der Container an ihren Enden.

Nachfolgend wird die Erfindung anhand der in den Zeichnungen dargestellten Ausführung näher erläutert. Es zeigen:

Fig. 1     eine Draufsicht auf den Sattelauflieger;

Fig. 2     eine Seitenansicht des Sattelaufliegers;

Fig. 3     einen Längsschnitt durch den mittleren Abschnitt des mittleren Längsrahmenteils entlang der Linie III-III in Figur 2;

Fig. 4     schematisch den Längsrahmen im zusammengeschobenen Zustand mit einem darauf angeordneten einzelnen Container; und

Fig. 5     schematisch den Längsrahmen im auseinandergezogenen Zustand mit zwei darauf hintereinander angeordneten Containern.

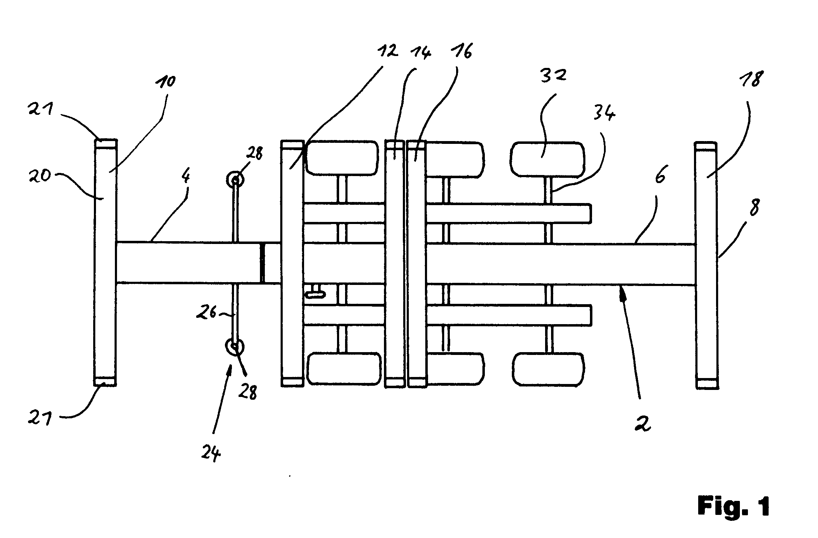

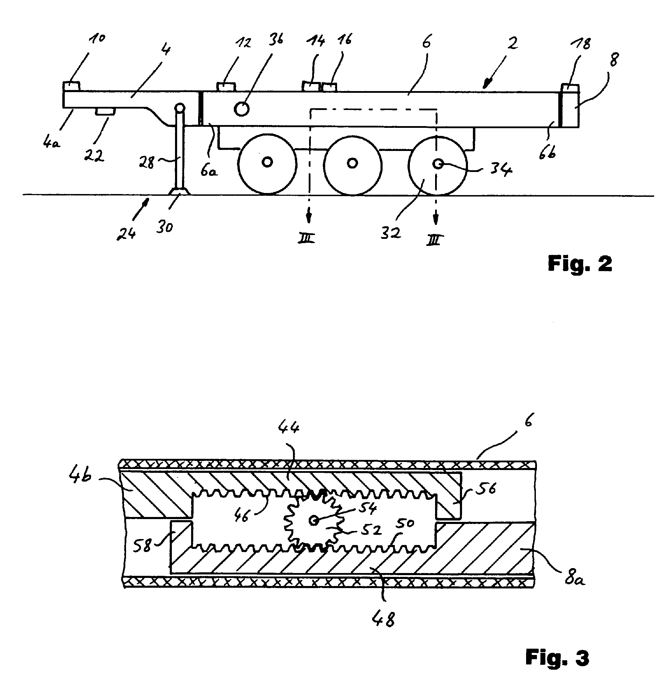

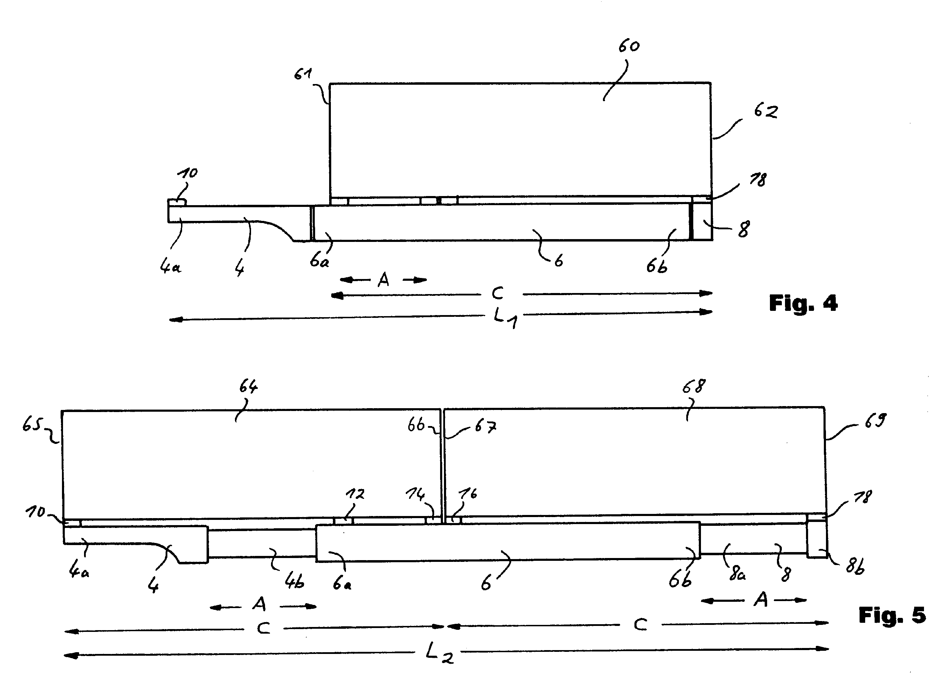

Der in seiner Gesamtheit in den Figuren 1 und 2 dargestellte Sattelauflieger weist einen Längsrahmen 2 auf, der in dem gezeigten Ausführungsbeispiel aus einem in Fahrtrichtung verlaufenden einzelnen Holm besteht. Der Längsrahmen 2 kann jedoch auch aus mehreren parallel zueinander angeordneten Holmen bestehen, die durch Querrahmenstreben zu einer Baueinheit verbunden sind. Der Längsrahmen 2 ist aus - in Fahrtrichtung betrachtet - einem vorderen, einem mittleren und einem hinteren Längsrahmenteil 4, 6 und 8 zusammengesetzt. Das mittlere Längsrahmenteil 6 besteht aus einem hohlen Längsholm, in dessen vorderes offene Ende 6a das vordere Längsrahmenteil mit seinem hinteren Abschnitt 4b und in dessen hinteres offenes Ende 6b das hintere Längsrahmenteil 8 mit seinem vorderen Abschnitt 8a gesteckt ist (vgl. insbesondere Figuren 4 und 5). Der Hohlraum des mittleren Längsrahmenteils 6 ist im Querschnitt rechteckig. Der hintere Abschnitt 4b des vorderen Längsrahmenteils 4 und der vordere Abschnitt 8a des hinteren Längsrahmenteils 8 sind stabförmig ausgebildet und im Querschnitt ebenfalls rechteckig, wobei sich der Hohlraum des mittleren Längsrahmenteils 6 und die stabförmigen Abschnitte 4b und 8a des vorderen und des hinteren Längsrahmenteils 4 und 8 in ihren Querschnittsabmessungen etwa entsprechen. Auf diese Weise sind das vordere und das hintere Längsrahmenteil 4 und 8 im mittleren Längsrahmenteil 6 verschiebbar gelagert und können aus diesem in Fahrtrichtung teleskopartig herausgezogen werden (vgl. Figuren 4 und 5). Aufgrund des rechteckigen Querschnitts des Hohlraums des mittleren Längsrahmenteils 6 und der stabförmigen Abschnitte 4b und 8a des vorderen und des hinteren Längsrahmenteils 4 und 8 wird eine Verdrehung der drei Längsrahmenteile 4, 6 und 8 gegeneinander um ihre Längsachse verhindert.

Wie aus den Figuren 1 und 2 ersichtlich wird, sind auf dem Längsrahmen 2 fünf Halteelemente 10 bis 18 angeordnet, wobei am vorderen Ende 4a des vorderen Längsrahmenteils 4 das erste Halteelement 10, am vorderen Ende 6a des mittleren Längsrahmenteils 6 das zweite Halteelement 12 und ebenfalls am mittleren Längsrahmenteil 4 in Fahrtrichtung hinter dem zweiten Halteelement 12 ein drittes und ein viertes Halteelement 14 und 16 und am hinteren Ende 8b des hinteren Längsrahmenteils 8 das fünfte Halteelement 18 sitzt. Jedes Halteelement besteht aus einem Querträger 20, an dessen Enden jeweils ein Fixierelement 21 angebracht ist. Der Querträger und die Fixierelemente sind zur Verdeutlichung nur in Figur 1 am ersten Halteelement 10 mit den entsprechenden Bezugszeichen gekennzeichnet worden. Die Breite der Querträger 20 entspricht der Breite der aufzusetzenden Container. Mit den Fixierelementen 21 werden die Container an ihren Enden auf dem Sattelauflieger fixiert.

An der Unterseite des vorderen Längsrahmenteils 4 ist ein Kupplungselement 22 für die Ankupplung an einen Sattelschlepper vorgesehen. Ferner ist am vorderen Längsrahmenteil eine Klappstütze 24 angeordnet, die mit einer quer zum Längsrahmen und somit zur Fahrtrichtung verlaufenden Klappachse 26 am vorderen Längsrahmenteil 4 schwenkbar gehaltert ist. An beiden Enden der Klappachse 26 sind im rechten Winkel Stützbeine 28 befestigt, die an ihrem unteren Ende mit einem Fuß 30 versehen sind. Die Klappstütze 24 dient zum Abstützen des Sattelaufliegers in seinem vorderen Bereich, wenn er vom Zugfahrzeug abgekuppelt ist. Dieser Fall ist in Figur 2 dargestellt, welche die Klappstütze 24 in ihrer Stützstellung zeigt. Demgegenüber ist im Fahrbetrieb die Klappstütze 24 um ihre Klappachse 26 nach oben verschwenkt und in der hochgeklappten, annähernd horizontalen Nichtgebrauchsstellung über nicht näher dargestellte Verriegelungsmittel arretiert.

Am mittleren Längsrahmenteil 6 sind drei Laufradachsen 34 angebracht, die Laufräder 32 tragen, wie aus den Figuren 1 und 2 ersichtlich wird. Ferner ist im Bereich des vorderen Endes 6a am mittleren Längsrahmenteil 6 eine Arretiereinrichtung 36 vorgesehen, die zur Arretierung der beiden im mittleren Längsrahmenteil 6 verschiebbar geführten vorderen und hinteren Längsrahmenteile 4 und 8 dient.

Figur 3 zeigt ausschnittsweise einen Längsschnitt durch den mittleren Bereich des mittleren Längsrahmenteils 6. Wie bereits erwähnt, sind das vordere Längsrahmenteil 4 mit seinem hinteren stabförmigen Abschnitt 4b und das hintere Längsrahmenteil 8 mit seinem vorderen stabförmigen Abschnitt 8a in das mittlere Längsrahmenteil 6 gesteckt und darin verschiebbar geführt. Wie aus Figur 3 ersichtlich wird, überlappen sich das vordere und das hintere Längsrahmenteil 4 und 8 mit ihren Enden 44 und 48 gegenseitig innerhalb des mittleren Längsrahmenteils 6. Die sich gegenseitig überlappenden Enden 44 und 48 besitzen auf ihren einander zugewandten Seiten jeweils eine Zahnreihe 46 bzw. 50. Beide sich gegenseitig überlappende Enden 44 und 48 des vorderen und des hinteren Längsrahmenteils 4 und 8 stehen über ihre Zahnreihen 46, 50 in Eingriff mit einem zwischen ihnen angeordneten Zahnrad 52. Das Zahnrad 52 ist mit seiner Welle 54 am mittleren Längsrahmenteil 6 drehbar gelagert. Auf diese Weise wird eine mechanische Kopplung zwischen dem ersten und dem dritten Längsrahmenteil 4 und 8 dergestalt gebildet, daß das dritte Längsrahmenteil 8 vom ersten Längsrahmenteil 4 angetrieben wird und nur in entgegengesetzter Richtung gegenüber diesem verschiebbar ist. Wird nämlich das vordere Längsrahmenteil 4 bewegt, so wird das Zahnrad 52 gedreht, wodurch das hintere Längsrahmenteil 8 in entgegengesetzer Richtung angetrieben und somit gegenläufig zum vorderen Längsrahmenteil 4 verschoben wird. Damit die sich gegenüberliegenden Enden 44 und 48 des vorderen und des hinteren Längsrahmenteils 4 und 6 nicht außer Eingriff kommen können, ist jeweils an dem Ende der Zahnreihen 46 und 50 ein vorspringender Anschlag 56 und 58 vorgesehen, der in der ausgezogenen Stellung des vorderen bzw. hinteren Längsrahmenteils 4 bzw. 8 gegen das Zahnrad 52 stößt.

Bei dem dargestellten Ausführungsbeispiel sind beide Zahnreihen 46 und 50 gleich lang. Ferner ist auch in jeder Verschiebestellung des vorderen und des hinteren Längsrahmenteils 4 und 8 der Abstand des Zahnrades 52 zu den beiden Anschlägen 56 und 58 gleich groß. Dadurch wird erreicht, daß das vordere und das hintere Längsrahmenteil 4 und 8 jeweils um den gleichen Verschiebeweg verschiebbar sind.

Der Sattelauflieger dient zum wahlweisen Transport unterschiedlicher Container, wobei der in den Figuren dargestellte Sattelauflieger insbesondere für den wahlweisen Transport von einem einzelnen 20- oder 40-Fuß-Container oder zwei hintereinander anzuordnenden 20-Fuß-Containern vorgesehen ist. Figur 4 zeigt schematisch den Sattelauflieger mit einen 20 Fuß langen Container 60 in einer Einzeltransportstellung, während Figur 5 zwei 20-Fuß-Container 64 und 68 in Hintereinanderanordnung auf dem Sattelauflieger darstellt.

Bei Auflage eines einzelnen Containers 60 ist der Längsrahmen 2 auf sein unteres Längenmaß $L_1$ zusam-

mengeschoben, wie aus Figur 4 ersichtlich wird. Dabei dienen zur endseitigen Abstützung des einzeln aufliegenden Containers 60 das zweite und das fünfte Halteelement 12 und 18. Dabei wird das vordere Ende 61 des Containers 60 vom zweiten Halteelement 12 und das rückwärtige Ende 62 des Containers 60 vom fünften Halteelement 18 fixiert. Zwar liegt der Container 60 auch auf den dritten und vierten Halteelementen 14 und 16 auf, jedoch dienen diese Halteelemente 14 und 16 in der Einzeltransportstellung nicht zur Fixierung des Containers 60. Auch das erste Halteelement 10 bleibt unbenutzt. Wegen der endseitigen Abstützung des Containers 60 entspricht der Abstand des zweiten und fünften Halteelementes 12 und 18 zueinander der Länge C des Containers 60, wenn der Längsrahmen auf sein unteres Längenmaß $L_1$ zusammengeschoben ist. Wie aus Figur 4 ersichtlich wird, liegt in der Einzeltransportstellung der Container 60 nur auf dem mittleren Längsrahmenteil 6 und auf dem noch freiliegenden Abschnitt des hinteren Längsrahmenteils 8 auf. Demgegenüber bleibt der freiliegende Abschnitt des vorderen Längsrahmenteils 4 frei. Somit ist die Länge $L_1$ des Längsrahmens im zusammengeschobenen Zustand größer als die Länge C des Containers 60.

Wie Figur 5 zeigt, ist der Längsrahmen 2 auf ein Längenmaß $L_2$ ausziehbar. Im ausgezogenen Zustand ist im dargestellten Ausführungsbeispiel die Länge $L_2$ des Längsrahmens gleich der Gesamtlänge 2C beider hintereinanderliegenden Container 64 und 68. Da im beschriebenen Ausführungsbeispiel das vordere und das hintere Längsrahmenteil 4 und 8 jeweils um den gleichlangen Verschiebeweg A ausziehbar sind, ist

$$L_2 = L_1 + 2A.$$

In der vollständig ausgezogenen Stellung gemäß Figur 5 dienen zur endseitigen Abstützung der Container 64 und 68 die ersten, dritten, vierten und fünften Halteelemente 10, 14, 16 und 18, während das zweite Halteelement 12 ungenutzt bleibt. Dabei fixiert das erste Halteelement 10 das vordere Ende 65 des vorderen Containers 64, das dritte Halteelement das rückwärtige Ende 66 des vorderen Containers 64, das vierte Halteelement 16 das vordere Ende 67 des vorderen Containers 68 und das fünfte Halteelement 18 das rückwärtige Ende 69 des hinteren Containers 68.

Damit im gezeigten Ausführungsbeispiel sowohl für die Einzeltransportstellung als auch für die Hintereinanderanordnung zweier Container nur Container gleicher Länge, z. B. 20-Fuß-Container, auf dem Sattelauflieger fixiert werden können, ist der Abstand zwischen dem zweiten und dem vierten Halteelement 12 und 16 so groß wie die halbe Differenz zwischen beiden Längenmaßen $L_1$, $L_2$ bzw. wie der maximale Verschiebeweg A des vorderen oder des hinteren Längsrahmenteils 4 oder 8, wie die Figuren 4 und 5 erkennen lassen.

## Patentansprüche

1. Sattelauflieger für Container mit einem von einem ersten ($L_1$) auf ein zweites Längenmaß ($L_2$) verlängerbaren Längsrahmen (2) zur Auflage von Containern (60; 64, 68) unterschiedlicher Lange und Anzahl, mit einem an einen Sattelschlepper kuppelbaren vorderen Längsrahmenteil (4), einem in Fahrtrichtung dahinter angeordneten mittleren Längsrahmenteil (6), an dem das vordere Längsrahmenteil (4) verschiebbar geführt und arretierbar ist sowie die Laufräder (32) angeordnet sind, und einem in Fahrtrichtung hinter dem mittleren Längsrahmenteil (6) angeordneten hinteren Längsrahmenteil (8), das ebenfalls am mittleren Längsrahmenteil (6) in Fahrtrichtung verschiebbar geführt und arretierbar ist, wobei die Längsrahmenteile (4, 6, 8) Halteelemente (10 bis 18) zur verriegelbaren endseitigen Abstützung der Container (60; 64, 68) aufweisen,
dadurch gekennzeichnet, daß das vordere und das hintere Längsrahmenteil (4, 8) mechanisch derart miteinander gekoppelt sind, daß sie nur in entgegengesetzter Richtung zueinander gegenüber dem mittleren Längsrahmenteil (6) verschiebbar sind und das hintere Längsrahmenteil (8) vom vorderen Längsrahmenteil (4) antreibbar ist.

2. Sattelauflieger nach Anspruch 1,
dadurch gekennzeichnet, das das vordere und das hintere Längsrahmenteil (4, 8) jeweils um den gleichen Längenabstand gegenüber dem mittleren Längsrahmenteil (6) verschiebbar sind.

3. Sattelaufliegen nach Anspruch 1 oder 2,
dadurch gekennzeichnet, daß sich am mittleren Längsrahmenteil (6) das vordere (4) und das hintere Längsrahmenteil (8) gegenseitig überlappen und auf ihren einander zugewandten Seiten (44, 48) Zahnreihen (46, 50) aufweisen, die gemeinsam mit einem zwischen ihnen (46, 50) liegenden und am mittleren Längsrahmenteil (6) gelagerten Zahnrad (52) in Eingriff stehen.

4. Sattelauflieger nach einem der Ansprüche 1 bis 3,
dadurch gekennzeichnet, daß das mittlere Längsrahmenteil (6) mindestens einen hohlen Längsholm und das vordere (4) und das hintere Längsrahmenteil (8) einen stabförmigen Abschnitt (44, 48) aufweisen, mit dem sie in das vordere bzw. das hintere offene Ende (6a,6b) des Längsholmes des mittleren Längsrahmenteils (6) gesteckt und aus diesem teleskopartig herausziehbar sind.

5.  Sattelauflieger nach Anspruch 4,
    dadurch gekennzeichnet, daß der Hohlraum des mittleren Längsrahmenteils (6) und der stabförmige Abschnitt (44, 48) des vorderen (4) und des hinteren Längsrahmenteils (8) im Querschnitt rechteckig sind.

6.  Sattelauflieger nach einem der Ansprüche 1 bis 5, zur wahlweisen Auflage von einem einzelnen Container (60), wenn der Längsrahmen (2) auf das erste Längenmaß ($L_1$) eingestellt ist, oder von zwei hintereinanderliegenden Containern (64, 68), wenn der Längsrahmen (2) auf das zweite Längenmaß ($L_2$) verlängert ist,
    dadurch gekennzeichnet, daß am vorderen Ende (4a) des vorderen Längsrahmenteils (4) ein erstes Halteelement (10), am mittleren Längsrahmenteil (6) ein zweites Halteelement (12) im vorderen Bereich (6a) und in Fahrtrichtung hinter diesem ein drittes (14) und ein viertes Halteelement (16) sowie am hinteren Ende (8b) des hinteren Längsrahmenteils (8) ein fünftes Halteelement (18) vorgesehen ist, wobei bei Anordnung eines einzelnen Containers (60) das zweite Halteelement (12) das vordere Ende (61) und das fünfte Halteelement (18) das rückwärtige Ende (62) des Containers (60) hält und bei Hintereinanderanordnung von zwei Containern (64, 68) das erste Halteelement (10) das vordere Ende (64) und das dritte Halteelement (14) das rückwärtige Ende (66) des vorderen Containers (64) und das vierte Halteelement (16) das vordere Ende (67) und das fünfte Halteelement (18) das hintere Ende (69) des hinteren Containers (68) fixiert.

7.  Sattelauflieger nach Anspruch 6,
    dadurch gekennzeichnet, daß der Abstand (A) zwischen dem zweiten (12) und dem vierten Halteelement (16) halb so groß ist wie die halbe Differenz ($L_2$ - $L_1$) zwischen beiden Längenmaßen ($L_1$, $L_2$) des Längsrahmens (2) daß der Abstand (C) zwischen dem ersten (10) und dem dritten Halteelement (14) gleich groß ist wie der Abstand zwischen dem vierten (16) und dem fünften Halteelement (18), wenn der Längsrahmen (2) auf das zweite Längenmaß ($L_2$) verlängert ist.

8.  Sattelauflieger nach einem der Ansprüche 1 bis 7,
    dadurch gekennzeichnet, daß die Halteelemente (10 bis 18) aus auf dem Längsrahmen (2) angeordneten Querträgern (20) mit an ihren beiden Enden vorgesehenen Fixierelementen (21) bestehen.

## Claims

1.  A semitrailer for containers, having a longitudinal frame (2) which
    may be extended from a first length ($L_1$) to a second length ($L_2$) for loading containers (60; 64, 68) differing in length and number, and has a front part (4) of the longitudinal frame which may be coupled to a semitrailer tractor, a middle part (6) of the longitudinal frame which is arranged behind the front part (4) of the longitudinal frame in the direction of travel and upon which the latter is guided so that it may be shifted and locked and also the running wheels (32) are arranged, and a rear part (8) of the longitudinal frame which is arranged behind the middle part (6) of the longitudinal frame and is likewise guided on the middle part (6) of the longitudinal frame so that it may be shifted in the direction of travel and locked, the parts (4, 6, 8) of the longitudinal frame exhibiting retainer members (10 to 18) for supporting and locking the containers (60; 64, 68) at the ends, characterized in that the front and rear parts (4, 8) of the longitudinal frame are coupled together mechanically in such a way that they can only shift in opposite directions to one another with respect to the middle part (6) of the longitudinal frame, and the rear part (8) of the longitudinal frame may be driven from the front part (4) of the longitudinal frame.

2.  A semitrailer as in Claim 1, characterized in that
    the front and the rear part (4, 8) of the longitudinal frame are able to shift respectively by the same distance lengthwise with respect to the middle part (6) of the longitudinal frame.

3.  A semitrailer as in Claim 1 or 2, characterized in that
    the front part (4) and rear part (8) of the longitudinal frame overlap one another on the middle part (6) of the longitudinal frame and exhibit on their sides (44, 48) next one another rows of teeth (46, 50) which engage mutually with a gearwheel lying between them (46, 50) and supported on the middle part (6) of the longitudinal frame.

4. A semitrailer as in one of the Claims 1 to 3, characterized in that
the middle part (6) of the longitudinal frame exhibits at least one hollow longitudinal spar and the front part (4) and rear part (8) of the longitudinal frame exhibit respectively a portion (44, 48) in the form of a rod by which it is pushed into the front or rear open end (6a, 6b) as the case may be of the longitudinal spar of the middle part (6) of the longitudinal frame, and may be pulled out again telescopically.

5. A semitrailer as in Claim 4, characterized in that
the cavity in the middle part (6) of the longitudinal frame and the rodlike portions (44, 48) of the front part (4) and rear part (8) of the longitudinal frame are rectangular in cross-section.

6. A semitrailer as in one of the Claims 1 to 5,
for loading at option with one single container (60) when the longitudinal frame (2) is set to the first length ($L_1$) or with two containers (64, 68) lying one behind the other when the longitudinal frame (2) is extended to the second length ($L_2$), characterized in that at the front end (4a) of the front part (4) of the longitudinal frame a first retainer member (10) is provided, on the middle part (6) of the longitudinal frame in the front region (6a) a second retainer member (12) is provided and behind it in the direction of travel a third retainer member (14) and a fourth (16), and also at the rear end (8b) of the rear part (8) of the longitudinal frame a fifth retainer member (18) is provided, so that in the arrangement of one single container (60) the second retainer member (12) holds the front end (61) and the fifth retainer member (18) the rear end (62) of the container (60), and in the arrangement of two containers (64, 68) one behind the other the first retainer member (10) fixes the front end (64) and the third retainer member (14) the rear end (66) of the front container (64) and the fourth retainer member (16) fixes the front end (67) and the fifth retainer member (18) the rear end (69) of the rear container (68).

7. A semitrailer as in Claim 4, characterized in that
the distance (A) between the second retainer member (12) and the fourth (16) is half of half the difference ($L_2 - L_1$) between the two lengths ($L_1$, $L_2$) of the longitudinal frame (2), and that the distance (C) between the first retainer member (10) and the third (14) is equal to the distance between the fourth retainer member (16) and the fifth (18) when the longitudinal frame (2) is extended to the second length ($L_2$).

8. A semitrailer as in one of the Claims 1 to 7, characterized in that
the retainer members (10 to 18) consist of crossbeams (20) arranged on the longitudinal frame (2) and provided with fixer members (21) at their two ends.


**Revendications**

1. Remorque pour conteneur avec un châssis longitudinal (2) extensible depuis une première longueur ($L_1$) jusqu'à une seconde longueur ($L_2$) pour disposer des conteneurs (60; 64, 68) en nombre et longueurs divers, avec un élément antérieur (4) de châssis longitudinal accouplable à un véhicule articulé, un élément (6) médian de châssis longitudinal placé en arrière selon la direction de déplacement, sur lequel l'élément (4) antérieur de châssis longitudinal est guidé en déplacement et bloquable et sur lequel sont également disposées les roues porteuses (32), et un élément arrière (8) de châssis longitudinal disposé en arrière de l'élément médian (6) de châssis longitudinal selon la direction de déplacement, qui est également guidé en déplacement selon la direction de déplacement et bloquable sur l'élément médian (6) de châssis longitudinal, les éléments de châssis longitudinal (4, 6, 8) présentant des éléments de maintien (10 à 18) pour le support verrouillable aux extrémités des conteneurs (60; 64, 68),
caractérisé en ce que les éléments antérieur et arrière (4, 8) de châssis longitudinal sont accouplés mécaniquement l'un à l'autre de manière à être déplaçables par rapport à l'élément médian (6) de châssis longitudinal seulement en direction opposée l'un à l'autre, et que l'élément arrière (8) de châssis longitudinal est actionné par l'élément antérieur (4) de châssis longitudinal.

2. Remorque selon la revendication 1 caractérisée en ce que les éléments antérieur (4) et arrière (8) de châssis longitudinal sont déplaçables chacun sur une distance identique par rapport à l'élément médian (6) de châssis longitudinal.

**3.** Remorque selon la revendication 1 ou 2 caractérisée en ce que l'élément antérieur (4) et l'élément arrière (8) du châssis longitudinal se chevauchent de façon interactive sur l'élément médian (6) de châssis longitudinal, et présentent sur leurs faces en regard (44, 48) des rangées de dents (46, 50) qui sont en prise avec une roue dentée (52) disposée entre eux (46, 50) et montée sur l'élément médian (6) de châssis longitudinal.

**4.** Remorque selon l'une des revendications 1 à 3 caractérisée en ce que l'élément médian (6) de châssis longitudinal présente au moins un longeron longitudinal creux, et les éléments antérieurs (4) et arrière (8) du châssis longitudinal présentent un tronçon en forme de barre (44, 48) avec lequel ils s'escamotent dans l'extrémité ouverte (6a, 6b) antérieure et arrière respectivement du longeron longitudinal de l'élément médian (6) de châssis longitudinal, et en sont extractibles télescopiquement.

**5.** Remorque selon la revendication 4 caractérisée en ce que la cavité de l'élément médian (6) de châssis longitudinal et le tronçon (44, 48) en forme de barre des éléments antérieur (4) et arrière (8) sont de section quadrangulaire.

**6.** Remorque selon l'une des revendications 1 à 5 pour recevoir de façon optionnelle un conteneur unique (60), lorsque le châssis longitudinal (2) est disposé selon la première longueur ($L_1$) ou deux conteneurs (64, 68) disposés l'un derrière l'autre lorsque le châssis longitudinal (2) est disposé selon la deuxième longueur ($L_2$)

   caractérisé en ce que à l'extrémité antérieure (4a) de l'élément antérieur (4) de châssis longitudinal est prévu un premier élément de maintien (10), à l'élément médian (6) de châssis longitudinal un second élément de maintien (12) dans la zone antérieure (6a) et derrière celui-ci selon la direction de déplacement un troisième (14) et un quatrième (16) éléments de maintien, ainsi qu'à l'extrémité arrière (8b) de l'élément arrière (8) de châssis longitudinal un cinquième élément de maintien (18), dans laquelle lors de la disposition d'un conteneur unique (60) le second élément de maintien (12) soutient l'extrémité avant (61) du conteneur (60) et le cinquième élément de maintien (18) l'extrémité arrière (62), et lors de la disposition de deux conteneurs (64, 68) l'un derrière l'autre, le premier élément de maintien (10) fixe l'extrémité avant (64) et le troisième élément de maintien (14) l'extrémité arrière (66) du conteneur avant (64), et le quatrième élément de maintien (16) fixe l'extrémité avant (67) et le cinquième élément de maintien (18) l'extrémité arrière (69) du conteneur arrière (68).

**7.** Remorque selon la revendication 6, caractérisé en ce que la distance (A) entre le second (12) et le quatrième (16) éléments de maintien égale la moitié de la différence ($L_2 - L_1$) entre les deux longueurs ($L_1$, $L_2$) du châssis longitudinal (2), en ce que la distance (C) entre le premier (10) et le troisième (14) éléments de maintien est identique à la distance entre le quatrième (16) et le cinquième (18) éléments de maintien, lorsque le châssis longitudinal (2) est amené à sa deuxième longueur ($L_2$).

**8.** Remorque selon l'une des revendications 1 à 7 caractérisée en ce que les éléments de maintien (10 à 18) sont constitués par des traverses (20) disposées sur le châssis longitudinal (2) et présentent à leurs deux extrémités des éléments de fixation (21).

**Fig. 1**

EP 0 414 254 B1

**Fig. 2**

**Fig. 3**

EP 0 414 254 B1

**Fig. 4**

**Fig. 5**